# EUROPEAN PATENT SPECIFICATION

(11) **EP 4 245 628 B1**
(45) Date of publication and mention of the grant of the patent: **12.08.2026**
(21) Application number: 22161926.5
(22) Date of filing: 14.03.2022
(51) Int. Cl.: B60W 60/00, B60W 50/14

(54) **SYSTEM FOR TRANSITIONING CONTROL OF A VEHICLE FROM AN AUTONOMOUS DRIVING SYSTEM TO A HUMAN DRIVER**
SYSTEM ZUM ÜBERGEBEN DER STEUERUNG EINES FAHRZEUGS VON EINEM AUTONOMEN ANTRIEBSSYSTEM AN EINEN MENSCHLICHEN FAHRER
SYSTÈME DE TRANSITION DE COMMANDE D'UN VÉHICULE D'UN SYSTÈME DE CONDUITE AUTONOME À UN CONDUCTEUR HUMAIN

(43) Date of publication of application: 20.09.2023
(73) Proprietor: Volvo Car Corporation, 40531 Göteborg (SE)
(72) Inventor: WICKMAN, Casper, 40531 Göteborg (SE)
(74) Representative: Kransell & Wennborg KB

(56) References cited:
- EP-A1- 3 284 646
- CN-A- 110 104 051
- DE-A1- 102013 003 595
- DE-A1- 102014 118 958
- JP-A- 2016 168 972
- US-A1- 2016 244 070
- US-A1- 2018 017 969

## Description

The present disclosure relates to a system for transitioning control of a vehicle from an autonomous driving system to a human driver.

Vehicles providing autonomous driving functionalities are known. In such vehicles, tasks such as longitudinal guiding and lateral guiding of the vehicle may be performed by an autonomous driving system, i.e. without the interaction of a human driver. In other words, the autonomous driving system is responsible for steering the vehicle, accelerating and braking.

Some vehicles having autonomous driving functionalities require that upon request of the autonomous driving system, the human driver rapidly takes over the control of the vehicle. This may be the case for vehicles offering autonomous driving functionalities according to Level 3 as defined by the Society of Automotive Engineers (SAE). In an illustrative example, the vehicle approaches a construction area and the autonomous driving system detects that it will not be able to further guide the vehicle, e.g. due to the absence of road markings. Consequently, the human driver is requested to take over control of the vehicle.

In this context, EP 3 284 646 A1 discloses a system and a corresponding method for transitioning control of a vehicle from an autonomous driving system to a human driver relying on the actuation of a single button. Additionally, a system and a corresponding method for transitioning control of a vehicle from an autonomous driving system to a human driver is known from CN 110 104 051 A. This document teaches to press two buttons simultaneously in order to transition control.

It is obvious that for the safety of all traffic participants, the transitioning of the control from the autonomous driving system to the human driver needs to happen in a smooth and calm manner.

It is an objective of the present disclosure to further improve known methods and systems for transitioning control of a vehicle from an autonomous driving system to a human driver.

The problem is at least partially solved or alleviated by the subject matter of the independent claim of the present disclosure, wherein further examples are incorporated in the dependent claims.

The problem is solved by a system according to claim 1 for transitioning control of a vehicle from an autonomous driving system to a human driver. Thus, a human driver can take over the control of the vehicle from the autonomous driving system using a single hand. This is easy for the human driver in nearly all autonomous driving situations, since in a situation, in which the autonomous driving system controls the vehicle, the human driver may be occupied doing other things than waiting for a request to steer the vehicle, e.g. eat, drink, read, play a game, watch a video, work. Thus, using the system according to the present disclosure, the human driver is able to take-over the control of the vehicle in a quick and simple manner performing a so-called "one hand take over" and "single hand take over". Consequently, the take-over happens in a calm and serene manner. This keeps a stress level of the human driver low and, therefore, enhances driving safety for the human driver and other traffic participants. Moreover, due to the one hand take over, also other hazardous events like unintentionally dropping objects or spilling hot drinks inside the vehicle are mitigated.

According to the present disclosure, the system further comprises a second singular switching means being located in a defined position on the steering wheel such that the second singular switching means can be actuated by a single human hand, wherein the second singular switching means is communicatively coupled to the data processing apparatus such that the data processing apparatus can determine whether the second singular switching means is actuated. Thus, the human driver can confirm the take-over of control over the vehicle by actuating either the first singular switching means or the second singular switching means. Consequently, for the human driver, taking over control is further facilitated since the human driver can use the singular switching means that is better reachable. This may depend on the fact whether the human drive holds an object, e.g. a book, food, a drink, an electronic device, in his or her left hand, in his or her right hand or in both hands. If the human driver has one free hand, it may be convenient to use the free hand to confirm the take-over of control and at least initially perform the control of the vehicle with this hand. In a case in which the human driver holds objects in both hands, one of these object may be easier to put away than the other. Thus, the human driver can put away the object that is easier to put away and take over control while the object that is less easy to put away at least temporarily remains in one of the human driver's hands. Thus, also in these cases, taking over control is facilitated. This leads to enhanced driving safety.

According to the present disclosure, the first singular switching means and the second singular switching means are redundant with respect to each other. This means that the first singular switching means and the second singular switching means have the exact same functionality and, thus, it does not matter whether the human driver takes over control using the first singular switching means or the second singular switching means. The human driver can, thus, use the switching means that appears most convenient in a situation in which take-over is requested.

In this context, a take-over request is to be understood as a message or a signal delivered by the autonomous driving system. The message or signal carries the information that the human driver needs to take over the control of the vehicle.

In the present disclosure, the autonomous driving system is a system which is configured to perform the longitudinal guiding and the lateral guiding of the vehicle. In other words, the autonomous driving system is configured to steer the vehicle, accelerate the vehicle and decelerate the vehicle without the interaction of a human driver. Another term of lateral guiding is transversal guiding.

A singular switching means is to be understood as exactly one switching means. This switching means may be switched between two states, i.e. a first state and a second state, wherein one of the first state and the second state is an actuated state and the respective other state is a non-actuated state. These states are distinct from one another. These states do neither overlap nor is it possible to smoothly or gradually transition from one state into the respective other state. The switching means is configured for being intentionally actuated by the human driver. Thus, the switching means is different from any kind of a sensor or detector which generally operates independently from an intention of the human driver. Especially, a hands-on-detector is to be seen as a sensor and not as a switching means in the sense of the present disclosure.

Triggering a deactivation of the autonomous driving system may be rephrased in that an autonomous driving mode is terminated and a manual or human driving mode is started.

Thus, actuating the singular switching means may be seen as a confirmation of taking over the control of the vehicle by the human driver.

The fact that a singular switching means has to be actuated as the only condition for triggering the deactivation of the autonomous driving system has the advantage that the actuation of the switching means can be performed by a single hand of the human driver. In nearly all autonomous driving situations, it is easier for the human driver to confirm the take-over of control and to at least initially perform the control with a single hand instead of two hands. This becomes clear if one imagines that in a situation in which the autonomous driving system controls the vehicle, the human driver may do other things, e.g. eat, drink, read, play a game, watch a video, work. Thus, the human driver may have things other than the steering wheel in one hand or both hands, e.g. a book, food, a drink, an electronic device. Thus, before being able to take over the control of the vehicle, the human driver will need to liberate at least one of his or her hands. These advantages are especially clear, if the human driver performs an activity needing both his or her hands while the autonomous driving system is controlling the vehicle. Thus, using the method according to the present disclosure, the human driver is able to take-over the control of the vehicle in a quick and simple manner performing a so-called "one hand take over" and "single hand take over". Consequently, the take-over happens in a calm and serene manner. This keeps a stress level of the human driver low and, therefore, enhances driving safety for the human driver and other traffic participants. Due to the reduced stress level, it is possible that a one-hand take-over even increases driving safety as compared to a two-hand take-over procedure.

According to an example, the deactivation of the autonomous driving system may be triggered if the singular switching means is determined to be actuated within a defined time period. This defined time period starts when the take-over request is received. Thus, for taking over the control by the human driver, the singular switching means needs to be actuated within the defined time period. The defined time period may also be designated as a time window. The defined time period may be 5 to 15 seconds, especially 8 to 12 seconds. In an example, the defined time period is 10 seconds. Thus, the human driver needs to take over the control relatively quickly. This ensures that the human driver takes over control of the vehicle before the autonomous driving system enters a situation in which it is not able to control the vehicle any more. Consequently, driving safety is enhanced.

According to an example, the method may comprise triggering a low risk manoeuver if the singular switching means is not determined to be actuated within the defined time period. A low risk manoeuver may also be designated as a minimum risk manoeuver. This means that an autonomous procedure for stopping the vehicle is triggered. In other words, the vehicle will be brought into a safe state if the human driver is not able to take over control within the defined time period or time window.

In an example, the deactivation of the autonomous driving system may be triggered if the singular switching means is determined to be actuated for a defined time. The defined time may be 0,5 to 2 seconds, especially 0,8 to 1,2 seconds. In an example, the time period is 1 second. Using such a defined time has the effect that the autonomous control of the vehicle is only triggered to be terminated in a case in which the human driver intentionally actuates the singular switching means. In a case in which the human driver unintentionally actuates the singular switching means for a time being shorter than the defined time, the autonomous driving system continues to control the vehicle.

According to an example, the method may further comprise triggering a notification for the human driver. Thus, the human driver is informed that he or she is requested to take over the control of the vehicle. The notification may be at least one of audible, visual, and tactile. Thus, the human driver is in a position to quickly react to the take-over request.

In an example, the method may further comprise requesting a steering wheel to move into an actuation position. Alternatively or additionally, a driver seat is requested to move into an upright position. This applies if the steering wheel is in a retracted or stowed position while the vehicle is controlled by the autonomous driving system. Consequently, while the vehicle is controlled by the autonomous driving system, the human driver has more space to perform activities other than steering the vehicle. In an actuation position, the steering wheel is in a position in which it can be comfortably grabbed by the human driver. Usually, the steering wheel is closer to the human driver when in the actuation position than when in the retracted or stowed position. As far as the driver seat is concerned, its back rest may be in a comfort position while the vehicle is controlled by the autonomous driving system. The driver may thus assume a relaxed seating positing. By requesting the steering wheel to move into the actuation position and/or by requesting the driver seat to move into an upright position, grabbing the steering wheel and taking over control is facilitated.

It is noted that in the present disclosure, the term steering wheel is to be understood to comprise any means that is configured for steering the vehicle. It is not necessary that this means is shaped as a wheel. Thus, the term steering wheel also designates a steering yoke or so-called rectangular steering wheels.

The method which may be executed by the data processing apparatus forming part of the system of claim 1 may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It is noted that the data processing apparatus forming part of the system of claim 1 is explained as an entity being separate from the autonomous driving system. This is done for the ease of explanation. Of course, the data processing apparatus may as well be formed as a part of an autonomous driving system. In such a case the data processing apparatus forms a first sub-unit of the autonomous driving system, wherein the functionalities of the autonomous driving system as has been explained above (steering, accelerating, decelerating) are performed by a second sub-unit of the autonomous driving system. Consequently, the interactions between the data processing apparatus and the autonomous driving system as described above, are realized as interactions of the first sub-unit of the autonomous driving system and the second sub-unit of the autonomous driving system.

In an example, in a standard position of the steering wheel, the first singular switching means may be arranged in a left half of the steering wheel and the second singular switching means may be arranged in a right half of the steering wheel or vice versa. In this context, the standard position of the steering wheel is defined as the position of the steering wheel which corresponds to the wheels of the vehicle being oriented straight ahead such that the vehicle would drive straight ahead. In such a configuration, one of the singular switching means is easily reachable by a left hand of the human driver and the other one is easily reachable by a right hand of the human driver. This also applies if the steering wheel has been turned out of its standard position. Thus, the human driver can actuate at least one of the first singular switching means and the second singular switching means with great ease within a comparatively short time.

In an example, at least one of the first singular switching means and the second singular switching means may be a press switch or a paddle switch. Such switching means may be actuated by the human drive in a simple manner. Furthermore, they offer a reliable switching functionality. Additionally, such switching means are little prone to being actuated unintentionally. Altogether, such switching means may be reliably actuated.

In an example, at least one of the first singular switching means and the second singular switching means may comprise at least one of a redundant power supply, and a redundant signal connection. Thus, at least one of the first singular switching means and the second singular switching means is highly reliable. In an example, both the first singular switching means and the second singular switching means comprise at least one of a redundant power supply, and a redundant signal connection. Thus, both singular switching means are highly reliable.

In an example, both the first singular switching means and the second singular switching means fulfil the Level D requirements of the Automotive Safety Integrity Level (ASIL) risk classification scheme as defined by the ISO 26262 standard.

It should be noted that the above examples may be combined with each other irrespective of the aspect involved. Accordingly, the method may be combined with structural features and, likewise, the apparatus and the system may be combined with features described above with regard to the method and so on.

These and other aspects of the present disclosure will become apparent from and elucidated with reference to the examples described hereinafter.

Examples of the disclosure will be described in the following with reference to the following drawings.
- Figure 1: shows a system according to the present disclosure for transitioning control of a vehicle from an autonomous driving system to a human driver, comprising a data processing apparatus, a computer program, and a computer-readable storage medium, wherein the data processing apparatus is configured to perform a method for transitioning control of a vehicle from an autonomous driving system to a human driver,
- Figure 2: shows a steering wheel of the system of Figure 1 in more detail,
- Figure 3: shows an alternative steering wheel that can be used instead of the steering wheel of Figure 2,
- Figure 4: shows a further alternative steering wheel that can be used instead of the steering wheel of Figure 2 or instead of the steering wheel of Figure 3, and

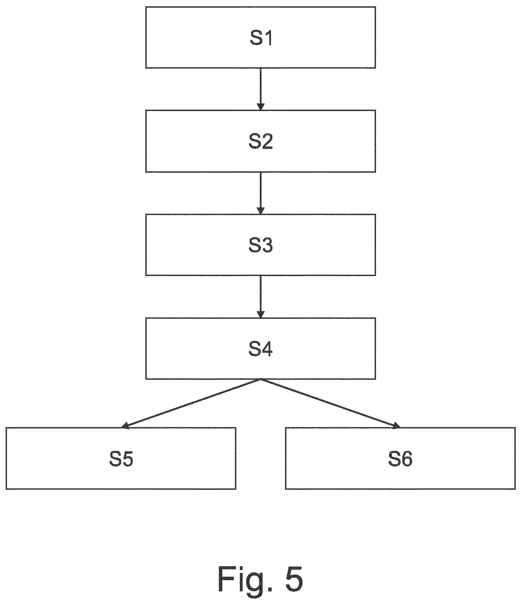

- Figure 5: illustrates steps of the method for transitioning control of a vehicle from an autonomous driving system to a human driver.

The figures are merely schematic representations and serve only to illustrate examples of the disclosure. Identical or equivalent elements are in principle provided with the same reference signs.

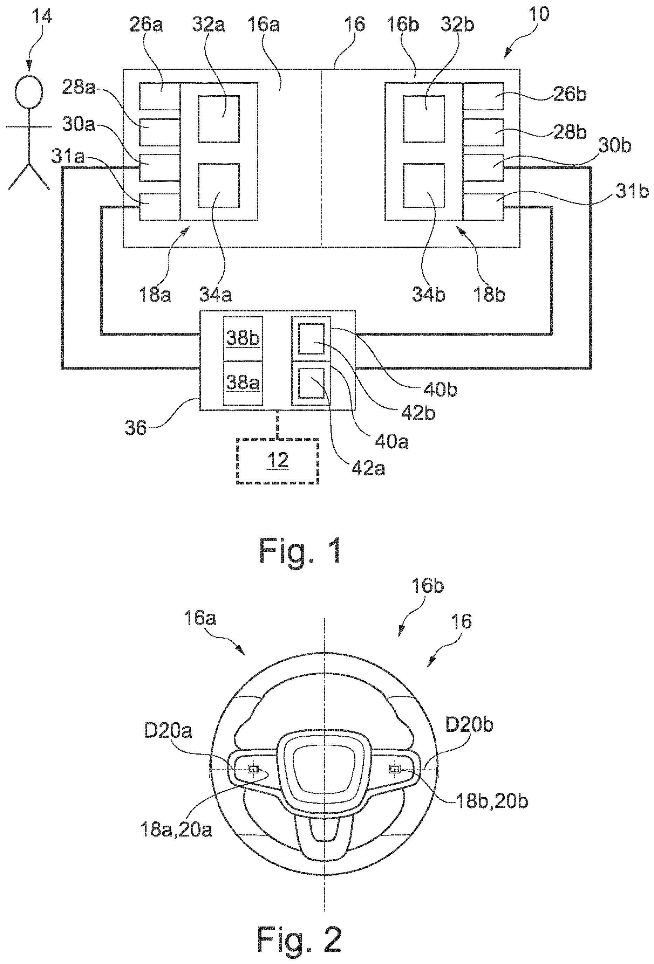

Figure 1 shows a system 10 for transitioning control of a vehicle from an autonomous driving system 12 to a human driver 14.

The system 10 comprises a steering wheel 16.

In a first defined position, a first singular switching means 18a is located on the steering wheel 16.

The first singular switching means 18a is arranged on the steering wheel 16 such that it can be actuated by a single human hand (see especially Figures 2 to 4).

Moreover, in a second defined position, a second singular switching means 18b is located on the steering wheel 16.

Also the second singular switching means 18b is arranged on the steering wheel 16 such that it can be actuated by a single human hand (see also Figures 2 to 4).

As can be seen from Figure 2, the first singular switching means 18a and the second singular switching means 18b may be press switches 20a, 20b being arranged on a front side of the steering wheel 16. The front side of the steering wheel 16 is the side of the steering wheel 16 which faces the human driver 14 when the steering wheel 16 is mounted in a vehicle.

Moreover, the press switches 20a, 20b are arranged such that they can be easily reached by a human hand holding the steering wheel rim, especially with a thumb of the human hand grabbing the steering wheel rim. In more details, a distance D20a, D20b between each of the press switches 20a, 20b and the respectively closest portion of the outer circumference of the steering wheel 16 is shorter than a length of a thumb of the human hand.

In the present example, the distances D20a, D20b are 4 to 5 centimeters respectively.

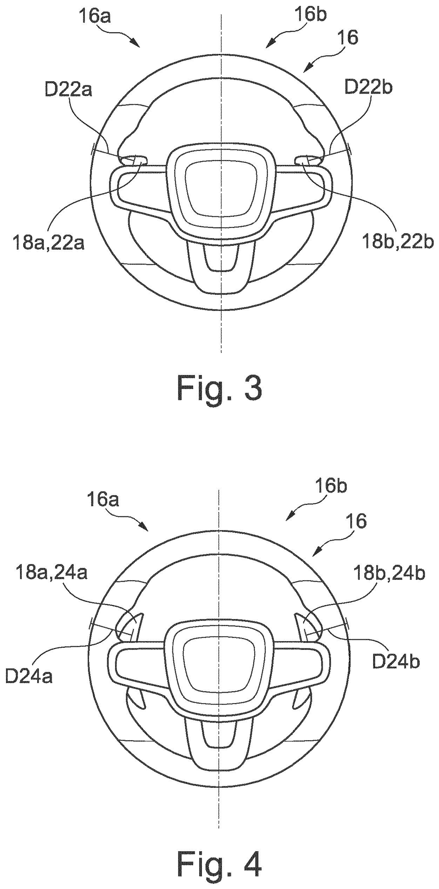

Alternatively, as can be seen from Figure 3, the first singular switching means 18a and the second singular switching means 18b may be paddle switches 22a, 22b being actuatable via the front side of the steering wheel 16.

Also the paddle switches 22a, 22b are arranged such that they can be easily reached by a human hand holding the steering wheel rim, especially with a thumb of the human hand grabbing the steering wheel rim. In more details, a distance D22a, D22b between each of the paddle switches 22a, 22b and the respectively closest portion of the outer circumference of the steering wheel 16 is shorter than a length of a thumb of the human hand.

In the present example, the distances D22a, D22b are 3 to 5 centimeters respectively.

A further alternative can be seen in Figure 4. In this alternative, the first singular switching means 18a and the second singular switching means 18b may be paddle switches 24a, 24b which are actuatable via the back side of the steering wheel 16.

Thus, the paddle switches 24a, 24b are arranged such that they can be easily reached by a human hand holding the steering wheel rim, especially with one or more of the index finger, the middle finger, the ring finger and the little finger which are laid around the steering wheel rim. A distance D24a, D24b between the paddle switches 24a, 24b and the respectively closest portion of the outer circumference of the steering wheel 16 is shorter than a length of at least one of the fingers mentioned above.

In the present example, the distances D24a, D24b are 3 to 5 centimeters respectively.

In Figures 2 to 4, the steering wheel 16 is shown in a so-called standard position, i.e. in a position that corresponds to a straight orientation of the wheels being coupled to the steering wheel 16. In this standard position, the first singular switching means 18a is arranged in a left half 16a of the steering wheel 16 and the second singular switching means 18b is arranged in a right half 16b of the steering wheel 16. This is the case for all alternatives shown in Figures 2 to 4.

It is noted that the straight orientation of the wheels being coupled to the steering wheel 16 is used for explaining the standard position of the steering wheel 16 only. Of course, the vehicle may be equipped with a steer by wire system, i.e. the steering wheel 16 may not be mechanically coupled to the wheels. In such a configuration, the orientation of the steering wheel 16 with respect to the wheels may be generally freely chosen. A steer by wire system has the advantage that the steering wheel 16 may stand still even though the autonomous driving system 12 steers the vehicle.

Furthermore, in all alternatives, the first singular switching means 18a comprises a redundant power supply which is represented by a first power connector 26a and a second power connector 28a.

Additionally, the first singular switching means 18a comprises a first signal connector 30a and a second signal connector 31a. Thus, the first singular switching means 18a has a redundant signal connection.

Moreover, the first singular switching means 18a has two signal generation units 32a, 34a which are redundant with respect to one another. The signal generation units 32a, 34a are configured for generating an electric signal upon actuation of the first singular switching means 18a.

The same applies to the second singular switching means 18b.

Thus, also the second singular switching means 18b comprises a redundant power supply which is represented by a first power connector 26b and a second power connector 28b.

Additionally, the second singular switching means 18b comprises a first signal connector 30b and a second signal connector 31b. Thus, the second singular switching means 18b has a redundant signal connection.

Moreover, the second singular switching means 18b has two signal generation units 32b, 34b which are redundant with respect to one another.

The first singular switching means 18a and the second singular switching means 18b are redundant with respect to each other. This means that both switching means 18a, 18b offer the same functionality. In a case in which one of the switching means 18a, 18b is not available, the full functionality is still provided by the other of the switching means 18a, 18b.

The system 10 also comprises a data processing apparatus 36.

The data processing apparatus 36 is communicatively coupled to the first singular switching means 18a via the first signal connector 30a and the second signal connector 31a.

Moreover, the data processing apparatus 36 is communicatively coupled to the second singular switching means 18b via the first signal connector 30b and a second signal connector 31b.

Moreover, the data processing means 36 is configured to determine whether the first singular switching means 18a is actuated and is configured to determine whether the second singular switching means 18b is actuated.

To this end, the data processing apparatus 36 comprises redundant means 38a, 38b for processing data and redundant computer-readable storage media 40a, 40b. Redundant computer programs 42a, 42b are stored on the respective computer-readable storage media 40a, 40b.

In this context, the means 38a together with storage medium 40a and computer program 42a may be connected to the first singular switching means 18a via first signal connector 30a and to the second singular switching means 18b via first signal connector 30b. Moreover, the means 38b together with storage medium 40b and computer program 42b may be connected to the first singular switching means 18a via second signal connector 31a and to the second singular switching means 18b via second signal connector 31b.

The data processing apparatus 36 is communicatively connected to the autonomous driving system 12.

The data processing apparatus 36 is configured for performing a method for transitioning control of a vehicle from the autonomous driving system 12 to the human driver 14. In more detail, each of the computer-readable storage media 40a, 40b and the computer programs 42a, 42b being stored thereon comprises instructions which, when being executed by the respective means 38a, 38b for processing data, cause the means 38a, 38b to carry out the method.

Each of the means 38a, 38b for processing data may be designated as a computer.

The method starts in a situation in which the autonomous driving system 12 controls the vehicle, i.e. the autonomous driving system 12 is responsible for steering, accelerating and decelerating the vehicle.

In such a situation, the autonomous driving system 12 may detect that it will not be able to further guide the vehicle, e.g. due to the absence of road markings.

In such a case, one of the data processing apparatuses 38a, 38b will receive, from the autonomous driving system 12, a take-over request as a first step S1. This means that a signal is transmitted to the respective data processing apparatus 38a, 38b comprising the information that the human driver 14 needs to take over control of the vehicle.

Subsequently, in a second step S2, a notification for the human driver 14 is triggered. Thus, the human driver 14 is informed that he or she needs to take over control. The notification for example comprises displaying a graphic or text on a screen within the vehicle and issuing a warning sound.

It is noted that this does not at all influence the possibility that the driver can take over control on his or her own initiative, i.e. without being notified.

Also, in a third step S3, the steering wheel 16 will be requested to move to an actuation position, i.e. to approach the human driver 14 such that the human driver 14 can easily grab the steering wheel 16.

Additionally or alternatively, also a driver seat is requested to move into an upright position.

The third step S3 may be performed in parallel to the second step S2.

It is noted that the third step S3 is optional.

The human driver 14 will thus stop his or her current activity. If the human driver 14 holds one or more objects in his or her hands, he or she needs to liberate at least one hand.

The human driver 14 approaches one hand towards the steering wheel 16, more precisely towards the one out of the first singular switching means 18a and the second singular switching means 18b that is best reachable with the liberated hand.

At the same time, in a fourth step S4 of the method, it is determining whether one of the first singular switching means 18a and the second singular switching means 18b is actuated.

If the human driver 14 actuates one of the first singular switching means 18a and the second singular switching means 18b within a defined time period of for example 10 seconds, and the actuation is detected, in a fifth step S5 a deactivation of the autonomous driving system is triggered. More precisely, a deactivation of the autonomous driving system 12 is triggered.

In other words, an autonomous driving mode is terminated and a manual or human driving mode is started.

It is noted that the detection of the actuation of one of the first and second singular switching means 18a, 18b is the only condition for deactivating the autonomous driving system 12.

In the present example, the first singular switching means 18a or the second singular switching means 18b needs to be actuated for a defined time of for example 0,5 seconds.

In a case, in which no actuation of one of the first and second singular switching means 18a, 18b is detected within the defined time period of for example 10 seconds or in which the one of the first and second singular switching means 18a, 18b is actuated shorter than the defined time of for example 0,5 seconds, in a sixth step S6, a low risk manoeuver is triggered, i.e. the vehicle is autonomously stopped. This of course goes along with warnings of increasing intensity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: system for transitioning control of a vehicle
- 12: autonomous driving system
- 14: human driver
- 16: steering wheel
- 16a: left half of the steering wheel
- 16b: right half of the steering wheel
- 18a: first singular switching means
- 18b: second singular switching means
- 20a: press switch
- 20b: press switch
- 22a: paddle switch
- 22b: paddle switch
- 24a: paddle switch
- 24b: paddle switch
- 26a: first power connector of the first singular switching means
- 26b: first power connector of the second singular switching means
- 28a: second power connector of the first singular switching means
- 28b: second power connector of the second singular switching means
- 30a: first signal connector of the first singular switching means
- 30b: first signal connector of the second singular switching means
- 31a: second signal connector of the first singular switching means
- 31b: second signal connector of the second singular switching means
- 32a: signal generation unit
- 32b: signal generation unit
- 34a: signal generation unit
- 34b: signal generation unit
- 36: data processing apparatus
- 38a: means for processing data
- 38b: means for processing data
- 40a: computer readable storage medium
- 40b: computer readable storage medium
- 42a: computer program
- 42b: computer program

- D20a: distance of press switch 20a from the respectively closest portion of the outer circumference of the steering wheel
- D20b: distance of press switch 20b from the respectively closest portion of the outer circumference of the steering wheel
- D22a: distance of paddle switch 22a from the respectively closest portion of the outer circumference of the steering wheel
- D22b: distance of paddle switch 22b from the respectively closest portion of the outer circumference of the steering wheel
- D24a: distance of paddle switch 24a from the respectively closest portion of the outer circumference of the steering wheel
- D24b: distance of paddle switch 24b from the respectively closest portion of the outer circumference of the steering wheel
- S1: first step
- S2: second step
- S3: third step
- S4: fourth step
- S5: fifth step
- S6: sixth step

## Claims

1. A system (10) for transitioning control of a vehicle from an autonomous driving system (12) to a human driver (14), comprising
a steering wheel (16),
a data processing apparatus (36) comprising means (38a, 38b) for carrying out a method for transitioning control of a vehicle from an autonomous driving system (12) to a human driver (14), the method comprising,
- receiving, from the autonomous driving system (12), a take-over request (S1),
- determining whether a singular switching means (18a, 18b) out of a first singular switching means (18a) and a second singular switching means (18b) is actuated (S4), wherein the first singular switching means (18a) and the second singular switching means (18b) are redundant with respect to each other, and
- triggering a deactivation of the autonomous driving system (12) under the only condition that the singular switching means (18a, 18b) out of the first singular switching means (18a) and the second singular switching means (18b) is determined to be actuated (S5),
the first singular switching means (18a) being located in a defined position on the steering wheel (16) such that the first singular switching means (18a) can be actuated by a single human hand, wherein the first singular switching means (18a) is communicatively coupled to the data processing apparatus (36) such that the data processing apparatus (36) can determine whether the first singular switching means (18a) is actuated, and wherein the first singular switching means (18a) comprises two redundant signal generation units (32a, 34a) both configured for generating an electric signal upon actuation of the first singular switching means (18a), and
the second singular switching means (18b) being located in a defined position on the steering wheel (16) such that the second singular switching means (18b) can be actuated by a single human hand, wherein the second singular switching means (18b) is communicatively coupled to the data processing apparatus (36) such that the data processing apparatus (36) can determine whether the second singular switching means (18b) is actuated, and wherein the second singular switching means (18b) comprises two redundant signal generation units (32b, 34b) both configured for generating an electric signal upon actuation of the second singular switching means (18b),
wherein the first singular switching means (18a) and the second singular switching means (18b) are redundant with respect to each other.

2. The system (10) of claim 2, wherein in a standard position of the steering wheel (16), the first singular switching means (18a) is arranged in a left half (16a) of the steering wheel (16) and the second singular switching means (18b) is arranged in a right half (16b) of the steering wheel (16) or vice versa.

3. The system (10) of claim 1 or 2, wherein at least one of the first singular switching means (18a) and the second singular switching means (18b) is a press switch (20a, 20b) or a paddle switch (22a, 22b, 24a, 24b).

4. The system (10) of any one of claims 1 to 3, wherein at least one of the first singular switching means (18a) and the second singular switching means (18b) comprises at least one of a redundant power supply (26a, 26b, 28a, 28b), and a redundant signal connection (30a, 30b, 31a, 31b).

## Patentansprüche

1. System (10) zum Übergeben der Steuerung eines Fahrzeugs von einem System für autonomes Fahren (12) an einen menschlichen Fahrer (14), umfassend
ein Lenkrad (16),
eine Datenverarbeitungseinrichtung (36), die Mittel (38a, 38b) zum Ausführen eines Verfahrens zum Übergeben der Steuerung eines Fahrzeugs von einem System für autonomes Fahren (12) an einen menschlichen Fahrer (14) umfasst, das Verfahren umfassend
- Empfangen, von dem System für autonomes Fahren (12), einer Übernahmeanforderung (S1),
- Bestimmen, ob ein einzelnes Schaltmittel (18a, 18b) aus einem ersten einzelnen Schaltmittel (18a) und einem zweiten einzelnen Schaltmittel (18b) betätigt wird (S4), wobei das erste einzelne Schaltmittel (18a) und das zweite einzelne Schaltmittel (18b) redundant zueinander sind, und
- Auslösen einer Deaktivierung des Systems für autonomes Fahren (12) unter der einzigen Bedingung, dass bestimmt wird, dass das einzelne Schaltmittel (18a, 18b) aus dem ersten einzelnen Schaltmittel (18a) und dem zweiten einzelnen Schaltmittel (18b) betätigt wird (S5), wobei sich das erste einzelne Schaltmittel (18a) in einer definierten Position an dem Lenkrad (16) befindet, so dass das erste einzelne Schaltmittel (18a) durch eine einzige menschliche Hand betätigt werden kann, wobei das erste einzelne Schaltmittel (18a) kommunikativ mit der Datenverarbeitungseinrichtung (36) gekoppelt ist, so dass die Datenverarbeitungseinrichtung (36) bestimmen kann, ob das erste einzelne Schaltmittel (18a) betätigt wird, und wobei das erste einzelne Schaltmittel (18a) zwei redundante Signalerzeugungseinheiten (32a, 34a) umfasst, die beide zum Erzeugen eines elektrischen Signals bei Betätigung des ersten einzelnen Schaltmittels (18a) konfiguriert sind, und
wobei sich das zweite einzelne Schaltmittel (18b) in einer definierten Position an dem Lenkrad (16) befindet, so dass das zweite einzelne Schaltmittel (18b) durch eine einzige menschliche Hand betätigt werden kann, wobei das zweite einzelne Schaltmittel (18b) kommunikativ mit der Datenverarbeitungseinrichtung (36) gekoppelt ist, so dass die Datenverarbeitungseinrichtung (36) bestimmen kann, ob das zweite einzelne Schaltmittel (18b) betätigt wird, und wobei das zweite einzelne Schaltmittel (18b) zwei redundante Signalerzeugungseinheiten (32b, 34b) umfasst, die beide zum Erzeugen eines elektrischen Signals bei Betätigung des zweiten einzelnen Schaltmittels (18b) konfiguriert sind, und
wobei das erste einzelne Schaltmittel (18a) und das zweite einzelne Schaltmittel (18b) redundant zueinander sind.

2. System (10) nach Anspruch 2, wobei in einer Standardposition des Lenkrads (16) das erste einzelne Schaltmittel (18a) in einer linken Hälfte (16a) des Lenkrads (16) angeordnet ist und das zweite einzelne Schaltmittel (18b) in einer rechten Hälfte (16b) des Lenkrads (16) angeordnet ist oder umgekehrt.

3. System (10) nach Anspruch 1 oder 2, wobei mindestens eines des ersten einzelnen Schaltmittels (18a) und des zweiten einzelnen Schaltmittels (18b) ein Druckschalter (20a, 20b) oder ein Paddelschalter (22a, 22b, 24a, 24b) ist.

4. System (10) nach einem der Ansprüche 1 bis 3, wobei mindestens eines des ersten einzelnen Schaltmittels (18a) und des zweiten einzelnen Schaltmittels (18b) mindestens eines von einer redundanten Stromversorgung (26a, 26b, 28a, 28b) und einer redundanten Signalverbindung (30a, 30b, 31a, 31b) umfasst.

## Revendications

1. Système (10) permettant de transférer le contrôle d'un véhicule d'un système de conduite autonome (12) à un conducteur humain (14), le système comprenant
un volant (16) de conduite,
un appareil de traitement de données (36) comprenant des moyens (38a, 38b) pour exécuter un procédé de transition du contrôle d'un véhicule d'un système de conduite autonome (12) à un conducteur humain (14), le procédé comprenant les étapes suivantes :
- recevoir, en provenance du système de conduite autonome (12), une requête de prise en charge (S1),
- déterminer si un moyen de commutation singulier (18a, 18b) parmi un premier moyen de commutation singulier (18a) et un deuxième moyen de commutation singulier (18b) est actionné (S4), où le premier moyen de commutation singulier (18a) et le deuxième moyen de commutation singulier (18b) sont redondants l'un par rapport à l'autre, et
- déclencher une désactivation du système de conduite autonome (12) à la seule condition que le moyen de commutation singulier (18a, 18b) parmi le premier moyen de commutation singulier (18a) et le deuxième moyen de commutation singulier (18b) soit déterminé comme étant actionné (S5),
le premier moyen de commutation singulier (18a) étant situé à une position définie sur le volant (16) de sorte que le premier moyen de commutation singulier (18a) puisse être actionné par une seule main humaine, le premier moyen de commutation singulier (18a) étant couplé en communication avec l'appareil de traitement de données (36) de sorte que l'appareil de traitement de données (36) puisse déterminer si le premier moyen de commutation singulier (18a) est actionné, et où le premier moyen de commutation singulier (18a) comprend deux unités de génération de signal redondantes (32a, 34a) toutes deux configurées pour générer un signal électrique lors de l'actionnement du premier moyen de commutation singulier (18a), et
le deuxième moyen de commutation singulier (18b) étant situé à une position définie sur le volant (16) de sorte que le deuxième moyen de commutation singulier (18b) puisse être actionné par une seule main humaine, le deuxième moyen de commutation singulier (18b) étant couplé en communication avec l'appareil de traitement de données (36) de sorte que l'appareil de traitement de données (36) puisse déterminer si le deuxième moyen de commutation singulier (18b) est actionné, et où le deuxième moyen de commutation singulier (18b) comprend deux unités de génération de signal redondantes (32b, 34b) toutes deux configurées pour générer un signal électrique lors de l'actionnement du deuxième moyen de commutation singulier (18b),
où le premier moyen de commutation singulier (18a) et le deuxième moyen de commutation singulier (18b) sont redondants l'un par rapport à l'autre.

2. Système (10) selon la revendication 2, dans lequel, dans une position standard du volant de conduite (16), le premier moyen de commutation singulier (18a) est agencé dans une moitié gauche (16a) du volant de conduite (16) et le deuxième moyen de commutation singulier (18b) est agencé dans une moitié droite (16b) du volant de conduite (16), ou vice versa.

3. Système (10) selon la revendication 1 ou la revendication 2, dans lequel au moins un du premier moyen de commutation singulier (18a) et du deuxième moyen de commutation singulier (18b) est un interrupteur à pression (20a, 20b) ou un interrupteur à palette (22a, 22b, 24a, 24b).

4. Système (10) selon l'une quelconque des revendications 1 à 3, dans lequel au moins l'un du premier moyen de commutation singulier (18a) et du deuxième moyen de commutation singulier (18b) comprend au moins l'une d'une alimentation électrique redondante (26a, 26b, 28a, 28b) et d'une connexion de signal redondante (30a, 30b, 31a, 31b).
